# EUROPÄISCHE PATENTANMELDUNG

(11) **EP 2 112 552 A1**
(43) Veröffentlichungstag der Anmeldung: **28.10.2009**
(21) Anmeldenummer: 09405062.2
(22) Anmeldetag: 06.04.2009
(51) Int. Cl.: G03B 21/64

(54) **Projektions- und Beleuchtungsvorrichtung**

(30) Priorität: 04.04.2008 CH 5232008
(71) Anmelder: Huber und Steiger Gmbh, 8032 Zürich (CH)
(72) Erfinder: Huber, Luzius, 8126 Zumikon (CH)
(74) Vertreter: Frei Patent Attorneys

(57) **Zusammenfassung**

Die erfindungsgemässe Projektions- oder Beleuchtungsvorrichtung weist eine Halterung (14), mindestens eine relativ zur Halterung (14) in definierter Position stehende Lichtquelle (6), und einen Bildhalter (12) zum Halten eines Durchlichtbildes (4) in einem von der Lichtquelle (6) zu einer Projektionsfläche oder zu einem zu beleuchtenden Objekt (10) führenden Strahlengang auf. Vorzugsweise ist auch eine Umlenk- und/oder Abbildungsoptik (8)/(9) vorhanden, die ebenfalls in definierter Position relativ zur Halterung (14) fixiert oder fixierbar ist.

Die Projektions-oder Beleuchtungsvorrichtung weist weiter eine Justiereinrichtung auf, welche eine justierbare Positionierung des Durchlichtbildes relativ zur Projektionsfläche gewährleistet. Die Befestigung des Durchlichtbildes am Bildhalter der Projektionsvorrichtung ist reversibel, spielfrei und passgenau, das heisst das Durchlichtbild ist wiederholbar immer gleich auf dem Bildhalter positionierbar.

## Beschreibung

Die Erfindung betrifft eine Projektions- und Beleuchtungsvornchtung zur präzisen Bildprojektion und insbesondere zur selektiven Beleuchtung von Gebäuden oder anderen Objekten.

Flutlichtanlagen werden in Städten traditionell zur Beleuchtung von Gebäuden eingesetzt. Eine erste Ausführungsform einer solchen Gebäudebeleuchtung beruht auf der Plazierung einiger weniger Flutlichscheinwerfer in einiger Entfernung vom zu beleuchtenden Gebäude. Dabei wird ein grosser Teil des Lichtes seitlich an den Gebäuden vorbei und nach oben gestrahlt. Aus dem Stand der Technik sind weiterhin Beleuchtungskonzepte bekannt, bei denen eine Mehrzahl von Leuchtquellen direkt auf der Fassade eines Gebäudes angebracht werden. Wenn diese nach unten gerichtet wären, hätten sie den Nachteil, dass sie den am Boden stehenden Betrachter blenden würden. Daher sind sie himmelwärts gerichtet, und viel Streulicht wird am Gebäude vorbei nach oben abgestrahlt. Sowohl Beleuchtungsanlagen mit entfernt stehenden Scheinwerfern als auch solche mit am Gebäude angebrachten Lichtquellen tragen folglich wesentlich zur Lichtverschmutzung des Nachthimmels in dicht besiedelten Gebieten bei.

Eine Weiterentwicklung der Flutbeleuchtung ist die präzise Bestrahlung eines Gebäudes, welche kein störendes Licht in die Umgebung und Richtung Himmel strahlt. EP 1'744'097 beschreibt eine solche Beleuchtungsvorrichtung, welche Licht von einer Punktlichtquelle durch eine Sammeloptik auf ein Durchlichtbild leitet und durch eine Abbildungsoptik auf ein Objekt strahlt. Das Durchlichtbild ist ein genaues Abbild der zu beleuchtenden Fläche eines Objektes beispielsweise eine Gebäudefassade aus dem Blickwinkel des Standortes der Beleuchtungsvorrichtung. Flächen oberhalb und seitlich der Fassade sind durch eine Maske abgedeckt. Ausgewählte Flächen wie beispielsweise Fenster oder Türen können ganz abgedeckt oder partiell lichtdurchlässig sein, was eine unterschiedliche Beleuchtungsintensität verschiedener Gebäudestrukturen ermöglicht. Voraussetzung für eine solche selektive Beleuchtung ist die präzise Projektion des Abbildes auf das zu beleuchtende Objekt. Solche präzise Projektionsverfahren sind seit längerem bekannt aus dem Bereich Kunst und Events, beispielsweise für Effekte auf der Bühne, Installationen oder bei Veranstaltungen. Neuer ist hingegen der alltägliche Einsatz, bei welchem die Projektions- oder Beleuchtungsvornchtung dauerhaft Einflüssen von Witterung und Verschmutzungen ausgesetzt ist und deshalb regelmässig gewartet werden muss. Hier stellt sich das Problem, dass eine Ausrichtung der Abbildungsoptik von Beleuchtungsvorrichtungen nur des Nachts eingestellt werden kann, was im Allgemeinen unerwünscht und teuer ist.

Der vorliegenden Erfindung stellt sich die Aufgabe, eine Vorrichtung zur präzisen Bildprojektion und insbesondere eine Beleuchtungsvorrichtung bereitzustellen, die geeignet für den dauerhaften Einsatz an einem festen Standort ist und bei welcher die Wartung - bspw. mit einer Reinigung und einem Auswechseln des Durchlichtbildes verbunden - einfach ist.

Diese Aufgabe wird gelöst durch eine Projektions- oder Beleuchtungsvorrichtung wie sie im unabhängigen Anspruch definiert ist. Die abhängigen Ansprüche definieren vorteilhafte Ausführungsformen der Erfindung.

Die erfindungsgemässe Projektions- oder Beleuchtungsvorrichtung weist eine Halterung, mindestens eine relativ zur Halterung in definierter Position stehende Lichtquelle, und einen von der Halterung gehaltenen Bildhalter zum Halten eines Durchlichtbildes in einem von der Lichtquelle zu einer Projektionsfläche oder zu einem zu beleuchtenden Objekt führenden Strahlengang auf. Ausserdem ist eine Justiereinrichtung vorhanden, welche eine justierbare Positionierung des Durchlichtbildes relativ zur Projektionsfläche gewährleistet. Die Befestigung des Durchlichtbildes am Bildhalter der Projektionsvorrichtung ist reversibel, spielfrei und passgenau, das heisst das Durchlichtbild ist wiederholbar immer gleich auf dem Bildhalter positionierbar. Vorzugsweise ist auch eine Umlenk- und/oder Abbildungsoptik vorhanden, die ebenfalls in definierter Position relativ zur Halterung fixiert oder fixierbar ist.

Durch das erfindungsgemässe Vorgehen ist ein Durchlichtbild sehr einfach und reproduzierbar immer gleich in die Projektions- oder Beleuchtungsvorrichtung einsetzbar, damit das Durchlichtbild nicht bei jedem Einsetzen in die Projektions-oder Beleuchtungsvorrichtung erneut ausgerichtet werden muss. Die Information über die relative Positionierung des Durchlichtbildes relativ zum zu beleuchtenden Objekt - diese beinhaltet implizit Informationen über die Abbildungsoptik - ist also quasi mechanisch gespeichert. Vorzugsweise besteht eine spielfreie mechanische Verbindung zwischen einem äusseren, auch die Lichtquelle haltenden Gehäuse (und bspw. auch einen fest an einer Unterlage oder an einem Gebäude oder dergleichen befestigbaren Sockel) einerseits und dem Durchlichtbild andererseits, wobei wie erwähnt das Durchlichtbild reversibel entfernbar ist.

In dieser Patentschrift wird häufig statt "Projektions- oder Beleuchtungsvorrichtung" der Begriff "Projektionsvornchtung" verwendet, wobei im Allgemeinen die Beleuchtungsvornchtung als spezielle Art einer Projektionsvorrichtung eingeschlossen ist.

In allen Ausführungsformen der Projektionsvorrichtung hat die Justiereinrichtung die Funktion das Durchlichtbild, beziehungsweise den Bildhalter, relativ zu der Projektionsfläche präzis auszurichten. In manchen Ausführungsformen bewirkt die Justiereinrichtung ein Verschwenken der ganzen Projektionsvorrichtung oder zumindest der Elemente der Projektionsvorrichtung, die den Strahlengang definieren. Auf diese Weise wird die Neigung sowie die horizontale und vertikale Ausrichtung des Durchlichtbildes relativ zur Projektionsfläche eingestellt je nach Schwenkposition der Projektionsvorrichtung beispielsweise relativ zu einem Sockel oder relativ zu einer festen Raumstruktur wie Boden, Decke oder Wand. In anderen Ausführungsformen kann die Justiereinrichtung bspw. einen Schwenkkopf oder dergleichen aufweisen, der nur einen Teil des Strahlenganges beeinflusst.

Einschiebbare Bildhalter oder Durchlichtbilder sind an sich aus dem Stand der Technik bekannt. Ein grosser Vorteil der erfindungsgemässen Projektions- und Beleuchtungsvorrichtung gegenüber solchen bekannten Projektionsvorrichtungen ist nun, dass das Durchlichtbild spielfrei und wiederholbar immer präzis gleich also reversibel passgenau in der Projektionsvorrichtung positionierbar ist. Dabei wird eine Präzision erreicht, welche in jeder Dimension x, y, z unter einem Millimeter und bspw. unter zwei Zehntelmillimeter liegt.

In weiteren Ausführungsformen ist die Justiereinrichtung eine einstellbare Halterung, wobei entweder die Halterung relativ zur Lichtquelle oder relativ zum Bildhalter oder relativ zu beidem einstellbar ist. Die Halterung kann also beispielsweise in verschiedenen Neigungswinkeln relativ zur Projektionsebene oder relativ zu der Lichtquelle einstellbar sein, und/oder sie kann lateral senkrecht zum Strahlengang verschoben werden. Die Halterung kann beispielsweise auch Mittel aufweisen, um einen eingeschobenen Bildhalter in verschiedenen lateralen Positionen und Neigungswinkeln zu befestigen. Dabei können beispielsweise unterschiedliche Positionen auch durch ein variables Ineinandergreifen von kompatiblen Strukturen an der Halterung und dem Bildhalter eingestellt werden. Auch Kombinationen solcher oder ähnlicher Einstellungsmittel zur justierbaren Befestigung des Bildhalters in der Halterung sind im Sinne der Erfindung.

Die Justiereinrichtung kann auch auf verschiedene Bauteile der Projektionsvornchtung verteilt sein, von welchen beispielsweise eine Grob- und Feineinstellung oder die Einstellung der Neigung und der lateralen Position unabhängig voneinander gewährleistet wird, wobei ihr Zusammenwirken das Durchlichtbild präzis ausrichtet.

Im folgenden werden Ausführungsvarianten ausführlicher beschrieben, in welchen die Justiereinrichtung gemäss einer weiteren Variante mindestens ein Justierelement aufweist, welches ein Teil des Bildhalters ist. Der Bildhalter gewährleistet in diesen Ausführungsformen also nicht nur die reversible passgenaue Befestigung des Durchlichtbildes am Bildhalter sondern ermöglicht auch die Justierung des Durchlichtbildes relativ zur Projektionsfläche. Ein Zusammenwirken mit weiteren Justiereinrichtungen wie oben beschrieben ist auch möglich und im Sinne der Erfindung.

In bevorzugten Ausführungsformen der Projektionsvorrichtung weist der Bildhalter das Justierelement und ein Einsetzelement auf. Das Einsetzelement gewährleistet ein spielfreies und passgenaues Einsetzen des Bildhalters in die Halterung im Strahlengang. In bevorzugten Ausführungsformen ist das spielfreie passgenaue Einsetzen in die Halterung reversibel. In diesen Ausführungsformen passt das Einsetzelement genau in eine durch mindestens eine Bildhalter-Einsetzstruktur und einer dazu komplementären Halterung-Einsetzstruktur an der Projektions- oder Beleuchtungsvorrichtung, in welche es wiederholt präzis gleich und leicht einsetzbar und aus welcher es leicht entfernbar ist. In anderen Ausführungsformen wird das Einsetzelement permanent in die Halterung eingesetzt, und beispielsweise eingeschweisst.

Das Justierelement ist relativ zum Einsetzelement in verschiedenen Positionen spielfrei fixierbar und gewährleistet so die Justierung des Durchlichtbildes relativ zum Einsetzelement in verschiedenen Positionen, in dem alle Dimensionen also lineare Justierungen entlang den x, y und z Achsen beziehungsweise Rotationsjustierungen in allen Richtungen relativ zum Einsetzelement möglich sind.

In manchen Ausführungsformen gewährleistet das Justierelement auch die Funktion des passgenauen Haltens eines Durchlichtbildes. In diesen Ausführungsformen wird das Durchlichtbild direkt von dem Justierelement gehalten. In anderen bevorzugten Ausführungsformen ist das Durchlichtbild auf einem zusätzlichen Bildträgerelement befestigt und dieses Bildträgerelement ist einerseits mit dem Justierelement reversibel passgenau verbindbar und andererseits ist das Durchlichtbild auf dem Bildträgerelement mitttels Passstrukturen passgenau reversibel befestigbar. Alle diese Verbindungen sind spielfrei mittels Schrauben, einem Klebstoff (beispielsweise auf Silikonbasis) oder anderen geeigneten lösbaren Befestigungsmitteln zur reversiblen Befestigung.

Selbstverständlich können das Einsetz- und das Justierelement nicht-trennbar miteinander verbunden sein, sofern die beiden Elemente relativ zueinander durch eine justierbare Struktur wie beispielsweise ein Kugelgelenk einstellbar und fixierbar sind. Auch im Falle einer nicht trennbaren Verbindung von Einsetz- und Justierelement sind sowohl Ausführungsformen mit einer reversiblen als auch mit einer permanenten Befestigung des Einsetzelementes in der Halterung der Projektions- oder Beleuchtungssvorrichtung im Sinne der Erfindung. Insbesondere in Ausführungsformen mit einer permanenten Befestigung des Einsetzelementes und einer nicht trennbaren Verbindung zwischen von Justierelement mit dem Einsetzelement ist das Durchlichtbild oder das auf einem Bildträgerelement montierte Durchlichtbild auswechselbar ohne dass gleichzeitig das Justierelement und das Einsetzelement der Halterung entnommen werden. Dabei wird vorzugsweise die reversible und passgenaue Befestigung des Durchlichtbildes oder des Bildträgerlementes auf dem Justierelement durch Passstrukturen oder Passmarken gewährleistet. Selbstverständlich sind grundsätzlich auch Ausführungsformen im Sinne der Erfindung, bei denen wahlweise der ganze Bildhalter mit Einsetz, Justier-und gegebenenfalls Bildträgerelement oder nur das Durchlichtbild mit oder ohne einem Bildträgerelement sehr einfach aus der Projektions- oder Beleuchtungsvorrichtung entfernbar und passgenau wieder einsetzbar sind.

Das Durchlichtbild kann in der Art eines Dias (in Grautönen oder mit Farbinformation) oder bspw. in der Art eines Gobo ausgebildet sein. Der Begriff Durchlichtbild umfasst in dieser Patentschrift sowohl ein einzelnes Durchlichtbild als auch eine Kombination von mehreren hintereinander gereihten Durchlichtbildern beispielsweise mit verschiedenen Motiven, oder mit Masken, Infrarot- Ultraviolett-oder Farbfiltern und dergleichen.

Die Lichtquelle kann eine Punktlichtquelle sein oder eine andere Abstrahlcharakteristik haben (bspw. gerichtet, räumlich kohärent oder auch streifenartig, flächig etc.). Sie kann als Entladungslampe, LED-(beziehungsweise LED-Array), Xenonlampe oder andere geeignete Lichtquelle ausgestaltet sein. Die Abbildungsoptik befindet sich vorzugsweise mindestens teilweise im Strahlengang dem Durchlichtbild nachgeschaltet; sie kann wie an sich bekannt geeignete Mittel zur Fokussierung des Bildes auf eine gewünschte Distanz aufweisen. Dem Durchlichtbild vor- oder nachgeschaltet können auch Umlenkmittel vorhanden sein, beispielsweise Spiegel oder dergleichen.

Das Durchlichtbild kann entweder direkt passgenau an dem Justierelement befestigt werden oder in bevorzugten Ausführungsformen der Erfindung an einem Bildträgerelement, welches sehr einfach und reproduzierbar immer gleich an dem Justierelement fixierbar ist, beispielsweise über eine Schraubverbindung. Die reversible präzise Montage des Bildträgerelementes auf dem Justierelement ermöglicht beispielsweise die Reinigung des darauf befestigten Durchlichtbildes oder auch ein Auswechseln des Durchlichtbildes, ohne dass die präzisen Projektionseinstellungen neu angepasst werden müssen.

Im Gegensatz dazu ist bei bekannten Projektionsvorrichtungen aus dem Bereich Kunst und Events der Aufwand für die genaue Projektion eines Durchlichtbildes oder einer Bildmaske für einen Beleuchtungseffekts grösser. Bei jedem Einsetzen des Durchlichtbildes in die Projektionsvorrichtung wird dieses relativ zum Projektor beziehungsweise der Projektionsfläche erneut genau positioniert. Deshalb sind diese Vorrichtungen nicht geeignet für einen dauerhaften Einsatz, bei welchem das Durchlichtbild zur Wartung der Projektions- oder Beleuchtungsvorrichtung regelmässig entfernt und wieder eingesetzt werden muss und auch das Durchlichtbild selbst periodisch gereinigt oder ersetzt werden muss. Insbesondere städtische Beleuchtungsvorrichtungen sind Witterungseinflüssen und Staub- und Russpartikel und Verschmutzungen ausgesetzt und müssen regelmässig gereinigt werden. Für selektive Beleuchtungskonzepte mit Beleuchtungsvorrichtungen mit einer herkömmlichen Bildbefestigung muss die projizierte Bildmaske in Nachtarbeit nach jeder Reinigung wieder neu auf die zu beleuchtende Objektfläche präzis ausgerichtet werden.

Der grosse Vorteil des Bildhalters ist, dass ein reproduzierbares passgenaues und spielfreies Wiedereinsetzen des gleichen Durchlichtbildes oder der gleichen Bildmaske in die Beleuchtungsvornchtung gewährleistet wird ohne eine erneute Ausrichtung auf das zu beleuchtende Objekt. Im Falle von Beleuchtungsvorrichtungen im Freien ist dies nicht nur ein Vorteil für Reinigungszwecke sondern es können auch verschiedene Bildmasken zur Umsetzung unterschiedlicher Beleuchtungskonzepte eingesetzt werden, beispielsweise für Alltags- und Festbeleuchtung. Selbstverständlich ist es auch ein Vorteil bei Anwendungen im Bereich Kunst und Events, dass bei erfindungsgemässen Projektions- oder Beleuchtungsvorrichtungen wiederholt Durchlichtbilder ausgewechselt werden können ohne eine erneute Ausrichtung des Durchlichtbildes. In manchen bevorzugten Ausführungsformen wird der ganze Bildhalter aus der Halterung entfernt. Beispielsweise gewährleistet dabei das Einsetzelement des Bildträgers ein reproduzierbar immer gleiches Einsetzen des Bildhalters in die Projektions- oder Beleuchtungsvorrichtung und das Justierelement die relativ zum Einsetzelement variable Fixierung. Das Durchlichtbild seinerseits ist sehr einfach und reproduzierbar direkt am Justierelement oder an einem zusätzlich vorhandenen Bildträgerelement befestigbar. Andere bevorzugte Ausführungsformen der Projektionsvorrichtung sind so konstruiert, dass nur Teile des Bildhalters, beispielsweise nur das Bildträgerelement zusammen mit dem Durchlichtbild oder nur das Durchlichtbild der Projektionsvorrichtung entnommen, gereinigt oder ausgewechselt und passgenau und spielfrei wieder eingesetzt werden.

Besonders bevorzugt ist das Durchlichtbild wie erwähnt ein Abbild des zu beleuchtenden Objektes, beispielsweise einer Gebäudefassade aus dem Blickwinkel des Standortes der Beleuchtungsvorrichtung. Flächen oberhalb und seitlich der Fassade sind durch entsprechende Schwärzungen im Durchlichtbild abgedeckt. Ausgewählte Flächen wie beispielsweise Fenster oder Türen können ganz abgedeckt oder partiell lichtdurchlässig sein, was eine unterschiedliche Beleuchtungsintensität verschiedener Gebäudestrukturen ermöglicht. Für diese Anwendung ist die genaue Ausrichtung des Bildes relativ zum beleuchtenden Objekt besonders kritisch. Das Durchlichtbild kann jedoch auch ein anderes, in definierter Position an eine Projektionsfläche zu projizierendes Bild darstellen. In der erfindungsgemässen Projektions- oder Beleuchtungsvorrichtung, welche im Allgemeinen an einem festen Standort permanent installiert ist, gewährleistet die Justage des erfindungsgemässen Bildhalters eine dauerhaft präzise laterale Ausrichtung des Durchlichtbildes auf die Projektionsfläche, indem das Justierelement relativ zum Einsetzelement lateral in der x- und y- Dimension der Durchlichtbildebene, einstellbar und fixierbar ist. In weiteren bevorzugten Ausführungsformen ist zusätzlich eine differentielle Fokussierung verschiedener Bereiche des Durchlichtbildes möglich. Diese zweite Einstellung kompensiert eine unterschiedliche Distanz der Projektions- oder Beleuchtungsvorrichtung zu verschiedenen Punkten auf der Projektionsfläche, da diese im Allgemeinen unterschiedlich gross ist. Beispielsweise steht die Beleuchtungsvorrichtung näher an einer Ecke der Gebäudefassade als an einer anderen. Zur Schärfekorrektur werden gewisse Teile des Durchlichtbildes näher an das Objektiv und andere weiter weg gerückt. Dazu wird das Justierelement und damit auch das Durchlichtbild relativ zum Einsetzelement leicht schräg gestellt. Das heisst die z- Dimension (entsprechend der Dimension senkrecht zur Durchlichtbildebene) ist in diesen Ausführungsformen für verschiedene Bildbereiche variabel einstellbar und fixierbar.

In bevorzugten Ausführungsformen des Bildhalters weisen das Durchlichtbild und das Justierelement sowie gegebenenfalls das Bildträgerelement Passmarken auf, mittels welcher das Durchlichtbild reproduzierbar passgenau auf dem Bildträger sowie die Elemente des Bildträgers untereinander reproduzierbar passgenau fixierbar sind.

In weiteren bevorzugten Ausführungsformen des Bildhalters sind das Einsetzelement, Justierelement und gegebenenfalls das Bildträgerelement als Rahmen ausgebildet. In der nachfolgenden Beschreibung werden daher das Einsetzelement, das Justierelement und gegebenenfalls das Bildträgerelement "Einsetzrahmen", "Justierrahmen" beziehungsweise "Bildträgerrahmen" bezeichnet. Einsetzrahmen, Justierrahmen und ggf. Bildträgerrahmen sind ungefähr parallel zueinander angeordnet. Die laterale Justage wird durch eine laterale Verschiebungsmöglichkeit des Justierrahmens relativ zu dem Einsetzrahmen gewährleistet und die differentielle Fokussierung verschiedener Bereiche des Durchlichtbildes wird durch die Möglichkeit einer leichten Schrägstellung des Justierrahmens relativ zum Einsetzrahmen gewährleistet, indem beispielsweise drei Stellschrauben vorhanden sind, die die z-Distanz zwischen Einsetzrahmen und Justierrahmen an entsprechenden drei Lateralpositionen individuell festlegen lassen.

Die folgenden Ausführungsvarianten werden für einen Bildträger beschrieben, dessen Einsetz-, Justier und gegebenenfalls Bildträgerelement als Rahmen ausgebildet sind. Selbstverständlich ist es auch möglich nur eines oder zwei dieser der Elemente als Rahmen auszubilden und weiter ist es auch möglich Merkmale verschiedener bevorzugter Ausführungsformen zu kombinieren. Beispielsweise kann das Justierelement als Justierrahmen ausgebildet sein, auf welchen der Bildträgerrahmen mittels Passmarken passgenau reproduzierbar immer gleich fixierbar ist. In weiteren bevorzugten Ausführungsformen des erfindungsgemässen Bildhalters, dessen Einsetz-, Justier und gegebenenfalls Bildträgerelement als Rahmen ausgebildet sind, ist deren äussere Form abgeleitet von einer runden Grundform mit einem runden Innenquerschnitt, durch welchen das Licht gerührt wird. Die Form kann aber selbstverständlich auch rechteckig oder in anderen Formen ausgebildet sein. Das Material der Rahmen muss eine genügende Stabilität und Hitzeresistenz sowie bei Anwendungen im Aussenbereich auch Kälte- und Korrosionsbeständigkeit aufweisen. In bevorzugten Ausführungsformen der Erfindung ist das Material ein rostfreier Stahl, in anderen Ausführungsformen kann auch ein geeigneter Kunststoff verwendet werden.

Der Einsetzrahmen gewährleistet eine immer gleiche Positionierung des Bildhalters relativ zum Projektor oder zu der Beleuchtungsvorrichtung. In einer bevorzugten Ausführungsfbrm der Erfindung wird der Einsetzrahmen mit einer Führungsschiene reproduzierbar gleich in einen Schwenkkopf der Beleuchtungsvorrichtung eingeschoben. Es gibt selbstverständlich weitere Mittel zur reproduzierbar immer gleichen Befestigung des Einsetzrahmens in der Projektions- oder Beleuchtungsvorrichtung beispielsweise ein Bajonett-Verschluss, mit dem der Einsetzrahmen eingedreht wird oder ein Schnappmechanismus mit dem er eingeklickt wird, etc.

Der Justierrahmen zusammen mit dem Einsetzrahmen gewährleistet die bereits generell beschriebene Funktion der präzisen Ausrichtung des Durchlichtbildes durch laterale Verschiebung des Justierrahmens relativ zum Einsetzrahmen in der Durchlichtbild-Ebene, wie es insbesondere erforderlich ist in bevorzugten Ausführungsformen der Erfindung zur selektiven Beleuchtung einer Gebäudefassade. Dazu weist beispielsweise mindestens entweder der Einsetzrahmen oder der Justierrahmen Löcher auf, deren Durchmesser markant grösser ist als der Durchmesser der durchzuführenden Schrauben, um die Befestigung in relativ verschiedenen Positionen zuzulassen. Selbstverständlich gibt es auch andere Varianten lateral in der x und y Richtung der Bildebene zu justieren wie beispielsweise mittels Einrichtungen wie sie von einem Mikrometertisch bekannt sind.

In Ausführungsformen des Bildhalters, in welchen zusätzlich zur präzisen lateralen Ausrichtung des Durchlichtbildes verschiedene Bildbereiche differentiell fokussierbar sind, werden wie bereits beschrieben gewisse Teile des Durchlichtbildes näher an das Objektiv und andere weiter weg gerückt. Dazu wird der Justierrahmen relativ zum Einsetzrahmen leicht schräg gestellt, wodurch das Durchlichtbild leicht schräg gestellt wird. In einer bevorzugten Ausführungsform der Erfindung werden beispielsweise drei Schrauben, welche den Justierrahmen am Einsetzrahmen präzis lateral ausrichten und befestigen unterschiedlich stark eingedreht, wobei ein unterschiedlich stark zusammen gepresster Federring oder das Einlegen einer bestimmten variablen Anzahl dünner Unterlagsscheiben zwischen den Justierrahmen und den Einsetzrahmen, die gewünschte Distanz bei jeder Schraube individuell einstellt. Selbstverständlich gibt es auch weitere Stellmechanismen, wie beispielsweise zwei Stifte mit Gewinde, welche mit einer Hülse mit einem Innengewinde verbunden sind, und je nach Drehposition werden die Stifte zusammen gezogen oder auseinander getrieben.

In einer weiteren bevorzugten Ausführungsform der Erfindung ist jeweils eine Unterlagscheibe bei jeder Schraube zur relativen Befestigung des Einsetz- und Justierrahmens als Federring ausgebildet. Dadurch kann zur passgenauen Ausrichtung des Durchlichtbildes im Projektionsapparat oder in der Beleuchtungsvorrichtung gegebenenfalls in einem ersten Schritt zunächst die Schärfekorrektur durch die geeignete Anzahl Unterlagsscheiben eingestellt werden. Vor der lateralen Positionierung werden die Schrauben ganz leicht gelockert, so dass gegen den Widerstand der Federringe der Justierrahmen relativ zum Einsetzrahmen lateral verschoben werden kann, bis das Durchlichtbild wunschgemäss präzis auf der Projektionsfläche abgebildet wird, oder beispielsweise bis eine Durchlichtbildmaske einer Gebäudefassade ganz genau auf die Fassade abgebildet wird. Danach werden die Schrauben wieder fest angezogen.

In einer besonders bevorzugten Ausführungsform der Erfindung weist der Justierrahmen und gegebenenfalls der Bildträgerrahmen eine zusätzliche Struktur auf, in welche ein Werkzeug eingreifen kann, das von ausserhalb der Projektionsbeziehungsweise der Beleuchtungsvorrichtung bedient werden kann. Beispielsweise kann mit einem Gabelschlüssel in eine Doppelbohrung des Justier- und gegebenenfalls Bildträgerrahmens eingegriffen werden. Damit kann das Durchlichtbild, während es in der Projektions- oder Beleuchtungsvorrichtung eingesetzt ist und projiziert wird, präzis lateral ausgerichtet werden.

Auch der Bildträgerrahmen gewährleistet zwei Funktionen: Erstens ermöglicht er eine reproduzierbare Montage eines Durchlichtbildes auf den Bildträgerrahmen, wobei sowohl auf dem Durchlichtbild als auch auf dem Bildträgerrahmen Passmarken vorhanden sind. Diese Passmarken auf dem Bild sind insofern wichtig, als belichtete Bilder im Allgemeinen lateral variabel auf einem transparenten Träger wie beispielsweise auf einem Film oder einer Glasplatte aufgebracht sind, während das Bild in sich sehr präzis ist. Deshalb ist es notwendig auch das Bild mit Passmarken zu versehen, welche für die Montage auf den Bildträgerrahmen als Referenzpunkte dienen. In einer bevorzugten Ausführungsform der Erfindung sind die Passmarken auf den Rahmen des Bildhalters als kleine ausgeschnittene Dreiecke an der Rahmenperipherie des Bildträgerrahmens und des Justierrahmens ausgebildet beziehungsweise als dreieckige Löcher im Einsetzrahmen ausgestanzt. Die Passmarken im Einsetzrahmen sind selbstverständlich nur für die Ausgangseinstellung relevant und sobald der Justierrahmen eingestellt ist bedeutungslos. In einer bevorzugten Ausführungsform der Erfindung ist das Durchlichtbild eine Glas- oder Kunststoffplatte, welche auf den Bildträgerrahmen geklebt, geschraubt, geklemmt oder mit anderen Mitteln befestigt wird. Die zweite Funktion des Bildträgerrahmens ist, dass er einfach und mittels Passmarken reproduzierbar genau auf dem Justierrahmen montierbar ist. In bevorzugten Ausführungsformen der Erfindung liegt der Bildträgerrahmen direkt auf dem Justierrahmen auf und wird nach der Ausrichtung auf die Passmarken mit wenigen Schrauben befestigt. Selbstverständlich kann das Durchlichtbild auch direkt auf dem Justierrahmen reversibel und reproduzierbar passgenau befestigt werden. Der gegebenenfalls zusätzliche Bildträgerrahmen weist eine Möglichkeit auf das Durchlichtbild stabilisiert mit einem Bildträgerrahmen vom Justierrahmen zu entfernen und passgenau wieder zu befestigen und die passgenaue Ausrichtung des Durchlichtbildes auf dem Bildträgerrahmen von der Montage auf dem Justierrahmen zu entkoppeln. Beispielsweise kann der Bildträgerrahmen auch als Einwegrahmen ausgebildet sein.

In einer bevorzugten Ausführungsform der Erfindung wird der Bildträger mit Einsetz-, Justier- und gegebenenfalls Bildträgerelement als Rahmen ausgebildet in einen Schwenkkopf einer Beleuchtungsvorrichtung eingeschoben, wobei eine Lichtquelle unterhalb eines Schwenkkopfes angeordnet ist, und ein Lichtstrahl über eine Spiegelfläche durch den Einsetzrahmen und dann durch die dahinter liegenden Justierrahmen und Bildträgerrahmen zum Durchlichtbild geführt wird. Selbstverständlich könnte in einer anderen Ausführungsform einer Beleuchtungsvorrichtung oder eines Projektors der Lichtstrahl auch in der entgegengesetzten Richtung durch den Bildhalter geführt werden, beziehungsweise die Rahmen in einer anderen Reihenfolge angeordnet sein.

Ein weiterer Aspekt der Verbindung betrifft ein Verfahren zur justierbaren Postionierung eines Durchlichtbildes relativ zu einer Projektionsfläche, wobei das Durchlichtbild reversibel passgenau auf einem Bildhalter positionierbar ist, wobei beim Auswechseln des Durchlichtbildes die eingestellte Justierung des Durchlichtbildes relativ zur Projektionsfläche gewährleistet ist.

Im Folgenden wird eine bevorzugte Ausführungsform der Erfindung anhand von Zeichnungen beschrieben. Es zeigen:
- Figur 1a und 1b:: Schematische Darstellungen beispielhafter Projektions- oder Beleuchtungsvorrichtung mit (Fig. 1a) und ohne (Fig.1b) Umlenkoptik.
- Figur 2:: Eine Explosionsdarstellung eines beispielhaften Bildhalters, bei welchem ein Einsetzelement, ein Justierelement und ein Bildträgerelement als Rahmen ausgebildet sind.

- Figur 3:: Eine schematische Darstellung eines Konstruktionsdetails von Strukturen zum reversiblen reproduzierbaren passgenauen Einsetzen des Einsetzelementes in eine Halterung einer beispielhaften Projektions- oder Beleuchtungsvorrichtung.

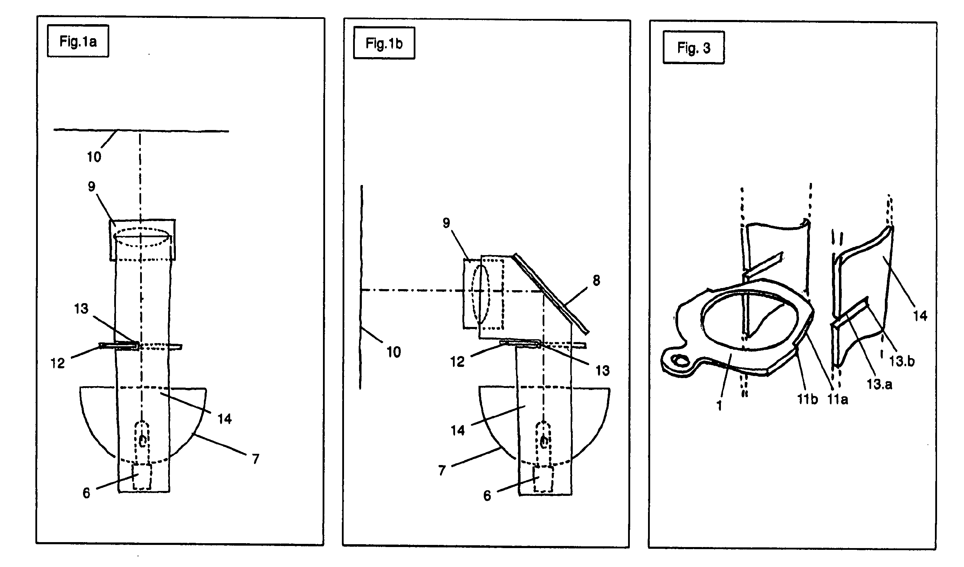

**Figur 1a** zeigt schematisch eine beispielhafte Projektions- oder Beleuchtungsvorrichtung. Dabei wird das Licht von einer Punktlichtquelle 6 kollimiert mittels eines Parabolspiegels 7 durch eine Sammeloptik 9 und auf die Projektionsfläche 10 oder das zu beleuchtende Objekt geführt, wobei ein erfindungsgemässer Bildträger 12 mit einem Durchlichtbild reproduzierbar immer gleich in eine Führungsstruktur 13 in die Halterung 14 der Projektions- oder Beleuchtungsvorrichtung einsetzbar ist.

**Fig. 1b** zeigt eine beispielhafte Projektions- oder Beleuchtungsvornchtung bei welcher der Strahlengang zusätzlich mittels einer Umlenkoptik 8 umgelenkt wird.

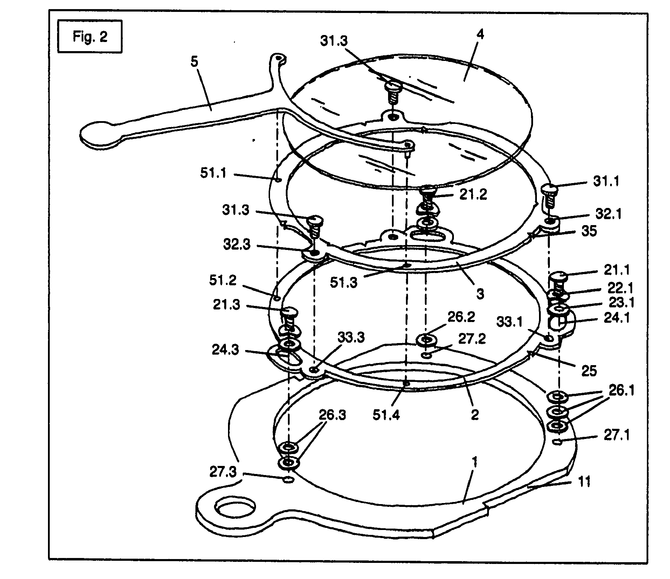

**Figur 2** zeigt eine Ausführungsform eines Bildträgers mit einem Einsetzrahmen 1, einem Justierrahmen 2 und einem Bildträgerrahmen 3. Der Einsetzrahmen 1 weist eine Einsetzstruktur 11 auf, welche ein passgenaues Einschieben des Einsetzrahmens 1 in eine komplementäre Struktur beispielsweise eine Führungsschiene einer Beleuchtungs- oder Projektionsvornchtung (Fig.3) gewährleistet.

Der Justierrahmen 2 wird am Einsetzrahmen 1 variabel positioniert und dann befestigt. Um die beiden Rahmen 1 und 2 aneinander zu befestigen, werden drei Stellschrauben 21.1 - 21.3 in drei Bohrungen 27.1 - 27.3 des Einsetzrahmens 1 geschraubt. Zuvor werden die drei Stellschrauben 21.1 - 21.3 durch Ausformungen mit Aussparungen 24.1-24.3 des Justierrahmens 2 geführt, wobei der Durchmesser der Aussparungen 24 grösser ist als der Durchmesser der Stellschrauben 21. Zwischen dem Schraubenkopf der Stellschrauben 21 und den Aussparungen 24 wird ein Federring 22.1 - 22.3 und mindestens eine Unterlagsscheibe 23.1 - 23.3 mit einem Lochdurchmesser kleiner als der Durchmesser des Schraubenkopfs der Stellschraube 21 eingesetzt. Dadurch, dass der Querschnitt der Aussparung 24 grösser ist als der Querschnitt der Stellschrauben 21, ist es möglich, den Justierrahmen 2 relativ zum Einsetzrahmen 1 in lateral verschiedene Positionen zu verschieben, was eine präzise Bildausrichtung ermöglicht. Weiter werden Unterlagsscheiben 26.1 - 26.3 zwischen den Justierrahmen und den Einsetzrahmen eingeführt, wobei die Anzahl der Unterlagsscheiben 26.1 einer Position unabhängig von der Anzahl der Unterlagsscheiben 26.2 und 26.3 der anderen Positionen wählbar ist. Selbstverständlich kann anstatt einer variablen Anzahl Unterlagsscheiben auch ein anderer Stellmechanismus verwendet werden zur Einstellung des Abstandes zwischen dem Einsetzrahmen 1 und dem Justierrahmen 2. Dadurch dass der Justierrahmen 2 relativ zum Einsetzrahmen 1 leicht schräg einstellbar ist, wird eine Schärfekorrektur erlaubt.

Der Bildträgerrahmen 3 wird mit drei Befestigungsschrauben 31.1 - 31.3 am Justierrahmen 2 befestigt, wobei die drei Befestigungsschrauben 31.1 - 31.3 durch Bohrungen 32.1 - 32.3 des Bildträgerrahmens 3 in Bohrungen 33.1 - 33.3 des Justierrahmens 2 geschraubt werden. Der Bildträgerrahmen 3 weist sowohl Passmarken 34 für die passgenaue Montage des Durchlichtbildes 4 als auch Passmarken 35 auf, wobei die Passmarken 35 auf Passmarken 25 des Justierrahmens abgestimmt werden.

Der Bildträgerrahmen weist weiter zwei Löcher 51.1 und 51.3 und der Justierrahmen entsprechende Löcher 51.2 und 51.4 auf , in welche ein Gabelschlüssel 5 eingreifen kann und mit welchem die aneinander befestigten Bildträgerrahmen 3 und Justierrahmen 2 relativ zum Einsetzrahmen 1 lateral gegen den Widerstand der Federringe 22.1 - 22.3 verschoben werden können, bevor die Stellschrauben 21.1 - 21.3 ganz fest geschraubt sind.

**Figur 3** zeigt schematisch beispielhafte Strukturen (11 und 13) zum reversiblen reproduzierbaren passgenauen Einsetzen eines Einsetzelementes in eine Halterung einer Projektions- oder Beleuchtungsvorrichtung. In der gezeichneten Ausführungsform ist das Einsetzelement ein Einsetzrahmen 1, welcher mit einer Ausnehmung 11 passend in eine Führungsschiene 13 von einer Halterung 14 einer beispielhaften Projektions- oder Beleuchtungsvorrichtung ausgerüstet ist. Dabei ist die Führungsfläche 11 a der Ausnehmung abgeschrägt zum leichteren Einschieben entlang der Führungsfläche 13a der Führungsschiene bis zur Berührung der beiden Anschlagsflächen der Ausnehmung 11b und der Führungsschiene 13b, welche die Endposition bestimmen. Die Abschrägung ergibt einen Spielraum, welcher die Einschiebbarkeit in die Führungsschiene 13 bis zur Berührung der Anschlagsflächen 11b und 13b erleichtert, wobei am Anschlagspunkt kein lateraler Spielraum mehr vorhanden ist und das Einsetzelement 1 reversibel reproduzierbar passsgenau in der Halterung 14 eingesetzt ist.

## Patentansprüche

1. Projektions- oder Beleuchtungsvorrichtung mit mindestens einer Lichtquelle (6), einer Halterung (14), relativ zu welcher die Lichtquelle (6) in einer definierten Position steht, und einem von der Halterung gehaltenen Bildhalter (12) zum Positionieren und Halten eines Durchlichtbildes in einem von der Lichtquelle (6) zu einer Projektionsfläche (10) oder zu einem zu beleuchtenden Objekt führenden Strahlengang, **dadurch gekennzeichnet, dass** die Projektions- oder Beleuchtungsvorrichtung eine Justiereinrichtung aufweist, welche eine justierbare Positionierung des Durchlichtbildes relativ zur Projektionsfläche (10) gewährleistet, und dass der Bildhalter (12) eine reversible passgenaue und spielfreie Befestigung eines Durchlichtbildes (4) am Bildhalter in einer durch die Justiereinrichtung definierten Position gewährleistet.

2. Die Projektions- oder Beleuchtungsvorrichtung nach Anspruch 1, **dadurch gekennzeichnet, dass** die Justiereinrichtung Mittel zum Verschwenken der Projektions- oder Beleuchtungsvorrichtung oder zumindest des Strahlenganges in der Projektions- oder Beleuchtungsvorrichtung aufweist, wodurch der Bildhalter (12), der in der Halterung (14) im Strahlengang positioniert ist, mitgeschwenkt wird und relativ zur Projektionsfläche (10) justierbar ist.

3. Die Projektions- oder Beleuchtungsvorrichtung nach Anspruch 1 oder 2, **dadurch gekennzeichnet, dass** das die Justiereinrichtung die Einstellung einer Position der Halterung relativ zur Lichtquelle und/oder die Einstellung einer Position des Bildhalters relativ zur Halterung ermöglicht.

4. Die Projektions- oder Beleuchtungsvorrichtung nach einem der Ansprüche 1 bis 3, **dadurch gekennzeichnet, dass** die Justiereinrichtung mindestens ein Justierelement (2) aufweist, das im Bildhalter (12) integriert ist, wodurch der Bildhalter eine justierbare Positionierung des gehaltenen Durchlichtbildes relativ zur Projektionsfläche gewährleistet.

5. Die Projektions- oder Beleuchtungsvorrichtung nach Anspruch 4, **dadurch gekennzeichnet, dass** der Bildhalter (12) ein Einsetzelement (1) mit einer Struktur (11) für die definierte, reversible und passgenaue Positionierung relativ zur Halterung (14) und das Justierelement (2), welches relativ zu dem Einsetzelement (1) in verschiedenen Positionen einstellbar und fixierbar ist und welches Strukturen zum reversiblen, spielfreien und passgenauen Halten des Durchlichtbildes (4) oder eines Bildträgerelementes (3) aufweist.

6. Die Projektions- oder Beleuchtungsvorrichtung nach Anspruch 5, **dadurch gekennzeichnet, dass** das Justierelement (2) und das Einsetzelement (1) nicht trennbar miteinander jedoch relativ zueinander einstellbar verbunden sind.

7. Die Projektions- oder Beleuchtungsvorrichtung nach Anspruch 5 oder 6, **dadurch gekennzeichnet, dass** das Justierelement (2) und das Bildträgerelement (3) Passmarken zur reproduzierbaren Montage aufweisen.

8. Die Projektions- oder Beleuchtungsvorrichtung nach einem der Ansprüche 5-7, **dadurch gekennzeichnet, dass** das Justierelement (2) relativ zum Einsetzelement (1) in einer Durchlichtbild-Ebene in lateral verschiedenen Positionen fixierbar ist.

9. Die Projektions- oder Beleuchtungsvorrichtung nach einem der Ansprüche 5-8, **dadurch gekennzeichnet, dass** das Justierelement (2) relativ zum Einsetzelement (1) so in unterschiedlichen Positionen fixierbar ist, dass verschiedene Neigungen der Durchlichtbild-Ebene relativ zur Strahlengangrichtung einstellbar sind.

10. Die Projektions- oder Beleuchtungsvorrichtung nach einem der Ansprüche 5 bis 9, **dadurch gekennzeichnet, dass** das Einsetzelement (1) und/oder das Justierelement (2) und/oder gegebenenfalls das Bildträgerelement (3) als Rahmen ausgebildet sind.

11. Die Projektions- oder Beleuchtungsvorrichtung nach einem der Ansprüche 5-10, **dadurch gekennzeichnet, dass** das Justierelement (2) oder das Einsetzelement (1), eine Anzahl, beispielsweise drei, Aussparungen (24) aufweist, wobei eine Querschnittsfläche der Aussparungen (24) wesentlich grösser ist als eine Querschnittsfläche von durch die Aussparungen (24) geführten Schrauben (21), wodurch das Justierelement (2) relativ zum Einsetzelement (1) in lateral verschiedenen Positionen einstellbar ist und/oder ein Abstand zwischen dem Justierelement (2) und dem Einsetzelement (1) an verschiedenen lateralen Positionen des Rahmens variabel einstellbar ist, beispielsweise durch Einschieben einer bei jeder von den andern Schrauben (21) unabhängig variablen Anzahl Unterlagsscheiben (26), wobei die Schrauben (21) das Justierelement (2) und das Einsetzelement (1) miteinander verbinden und wobei beispielsweise ein Federelement (22) zwischen den Schraubenkopf der Schraube (21) und dem Einsetzelement (1) oberhalb oder unterhalb des Justierelementes (2) eingeschoben ist.

12. Die Projektions- oder Beleuchtungsvorrichtung nach einem der vorangehenden Ansprüche, **dadurch gekennzeichnet, dass** der Bildhalter (12) permanent in der Projektions- oder Beleuchtungsvorrichtung eingesetzt ist oder der Bildhalter (12) reversibel in die Halterung (14) der Projektions- oder Beleuchtungsvorrichtung einsetzbar ist.

13. Die Projektions- oder Beleuchtungsvorrichtung nach einem der vorangehenden Ansprüche, **dadurch gekennzeichnet, dass** das Justierelement (2) und gegebenenfalls das Bildträgerelement (3) eine zusätzliche Struktur (51) aufweist für das Eingreifen eines Werkzeuges (5), welches von ausserhalb der Projektions-oder Beleuchtungsvorrichtung bedienbar ist und mit dem das Justierelement (2) relativ zum Einsetzelement (1) lateral verschiebbar ist.

14. Bildhalter (12) zur Verwendung in einer Projektions- oder Beleuchtungsvorrichtung **dadurch gekennzeichnet, dass** er ein Einsetzelement (1) und ein Justierelement (2) und gegebenenfalls ein Bildträgerelement (3) zum Halten eines Durchlichtbildes (4) aufweist, wobei das Justierelement (2) relativ zu dem Einsetzelement (1) in verschiedenen Positionen fixierbar ist und das Einsetzelement (1) mit einer mit einer Struktur (11) ausgerüstet ist für eine definierte, reversible und passgenaue Positionierung relativ zu einer Halterung (14) oder das Einsetzelement fest mit der Halterung verbunden ist.

15. Verfahren zur justierbaren Postionierung eines Durchlichtbildes relativ zu einer Projektionsfläche, **dadurch gekennzeichnet, dass** das Durchlichtbild reversibel passgenau und spielfrei auf einem Bildhalter positioniert wird, wobei beim Auswechseln des Durchlichtbildes die eingestellte Justierung des Durchlichtbildes relativ zur Projektionsfläche unverändert erhalten bleibt.
